# EUROPEAN PATENT APPLICATION

(11) **EP 0 715 445 A2**
(43) Date of publication of application: **05.06.1996**
(21) Application number: 95500162.3
(22) Date of filing: 02.12.1995
(51) Int. Cl.: H04M 3/50, H04M 11/00

(54) **System for performing distance hotel reservations and similar reservations**

(30) Priority: 02.12.1994 ES 9402480; 02.12.1994 ES 9402481
(71) Applicant: Garcia Abasolo, Fernando, E-28770 Colmenar Viejo (ES); Garcia Abasolo, Carmelo, E-28770 Colmenar Viejo (ES)
(72) Inventor: Garcia Abasolo, Fernando, E-28770 Colmenar Viejo (ES); Garcia Abasolo, Carmelo, E-28770 Colmenar Viejo (ES)
(74) Representative: Gonzalez Vacas, Eleuterio

(57) **Abstract**

The system involves a series of automatic hotel terminals and computer means which, via public communication networks such as a telephone network, are connected to a series of interactive public terminals (3) structured on the basis of an internal processor unit (4) which, by means of a communication module (7), is associated to the various automatic hotel terminals from which it receives information, being assisted by a TV monitor (8), an automatic cashier (9), a keypad (10) and a printer (11) in such a manner as to enable the user to request for information, through the keypad (10), in regard to room availability and prices from the hotels integrated in the system, said information being received in the monitor (8) and, if applicable, implementing the reservation in one of said hotels after an amount of money is introduced in the automatic cashier (9), the printer (11) thereafter issuing a voucher.

## Description

### PURPOSE OF THE INVENTION

The present invention refers to a system specifically designed to provide, through a series of public terminals, detailed information about hotel room availability, prices, etc., relating to a series of hotels integrated in the system which further allows, after selecting a given hotel, to make distance reservations.

The system is particularly suitable for use in tourist areas with a high hotel concentration, although it is equally applicable to other sectors of day to day life requiring a similar service.

### BACKGROUND OF THE INVENTION

Within the preferred scope of the practical application of the invention, namely the hotel industry, regardless of the reservations made "in situ", directly at the hotel, or through a telephone call to the hotel, involving previous knowledge concerning existing hotels in a given area and the characteristics of each hotel, the solution normally adopted requires the services of a travel agency or similar organization providing direct or indirect customer information on all related matters.

However, travel agencies fail to cover the market with the amplitude desired by the consumer. Furthermore, high investment and maintenance costs are involved, requiring special facilities, trained personnel, etc.

### DESCRIPTION OF THE INVENTION

The system for making distance hotel reservations and similar reservations proposed by the invention solves, in a fully satisfactory manner, the previously described problems by the use of strategically located interactive public terminals needing considerably lower investment and maintenance costs than a travel agency or similar organization, providing the user at all times with updated information in regard to hotel room availability in specific areas and enabling, as previously stated, direct and automatic reservations to be made which only require payment of a specified amount of money, in cash or by credit card, to validate the reservation.

More specifically, the proposed system comprises at least one interactive public terminal, although obviously as many terminals as desired can be used, suitably distributed throughout the city or geographical area and which, through a public communications network such as a telephone network, are in contact with the hotels integrated in the system.

Each hotel integrated in the system is in telephone contact with the various interactive public terminals and is furthermore fitted with an automatic configuration terminal which, in the event that a user selects a hotel and pays the reservation fee at the interactive public terminal, will automatically confirm said payment to the hotel operator through an optical and/or acoustic signal.

Optionally, each of the hotels integrated in the system is fitted with an automatic terminal comprising a computer installation capable of receiving enquiries from any of the interactive public terminals and providing information as to the hotel's occupational situation, prices, etc., in addition to entering all reservation confirmations coming from said terminals.

Concerning the interactive public terminals, they are structured on the basis of an internal processor unit connected to the hotel's automatic confirmation terminal, and are fitted with a TV monitor, an automatic cashier, a keypad, a printer and a microtelephone.

More specifically, the interactive public terminal keypad enables the user to receive, through the TV monitor, information relating to each and all of the hotels integrated in the system; after selecting the hotel, said selection provides automatic dialing of the hotel's telephone number and subsequent telephone contact with the hotel operator, who can then inform the user about room availability, since all other data such as hotel characteristics, prices, etc., have already been provided by the interactive public terminal, thus allowing the user to request for any additional information verbally and finally informing the hotel operator that he is about to make a reservation.

Reservations are also implemented through the keypad, using the automatic cashier which allows for a specified amount of cash to be inserted or alternatively using a credit card, with the terminal issuing, through the printer, a ticket serving as a reservation voucher; this simultaneously sends out the corresponding reservation signal to the hotel's automatic confirmation terminal, thus providing the hotel operator with information to the effect that the reservation fee has been paid and thereby confirming the reservation.

Obviously, in the case of hotels integrated in the system which are fitted with an automatic terminal, once the hotel is selected, the reservation may be sent through using the public terminal keypad at the location from which the operation is being conducted, whereby a specified amount of cash is inserted in the automatic cashier or alternatively paid by credit card, with the terminal issuing, through the printer, a ticket serving as a reservation voucher.

### DESCRIPTION OF THE DRAWINGS

In order to complete this description and to provide a better understanding of the characteristics of the invention, attached to this specification and as an integral part thereof is a set of drawings showing the following illustrative, non limiting features:

Figure 1 is a schematic illustration showing a semi-automatic system for performing distance hotel reservations, comprising a group of five hotels and an unspecified number of interactive public terminals.

Figure 2 is a front elevation - with its door in open and closed condition - and a side elevation of one of the interactive public terminals included in the system depicted in the previous figure.

Figure 3 is a block diagram corresponding to each of the interactive public terminals.

Figure 4 is a schematic illustration, similar to that of figure 1, showing an automatic system.

Figures 5 and 6 are illustrations similar to those of figures 2 and 3, although applicable to the automatic system shown in figure 4.

### PREFERRED EMBODIMENT OF THE INVENTION

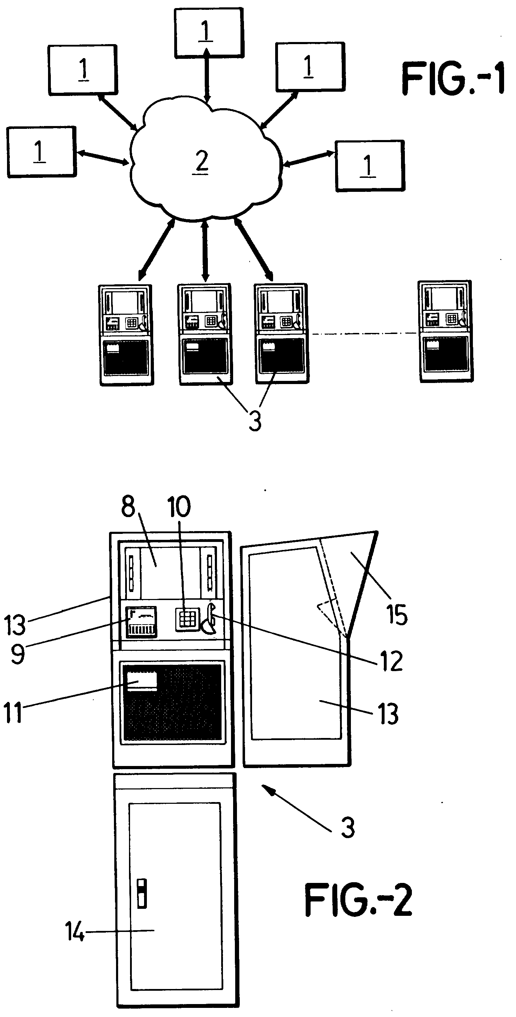

According to a first variation of a practical embodiment of the system, as shown in figures 1 to 3, which define a semi-automatic system, the system in question is designed to provide connection of a series of hotels (1) through a public communications network (2) such as a switch telephone network (Iberpac, R.D.S.I., etc.) with a series of interactive public terminals (3) suitably distributed over a given geographical area, providing easy access to any of them by possible users of the hotels (1) integrated in the system.

Each hotel (1) is fitted - as previously stated, and in addition to the corresponding telephone connection with each of the interactive public terminals - with an automatic hotel confirmation terminal designed to receive confirmations from customers paying a reservation fee, including a feature serving to inform the integrated interactive public terminals about hotel room availability or non availability.

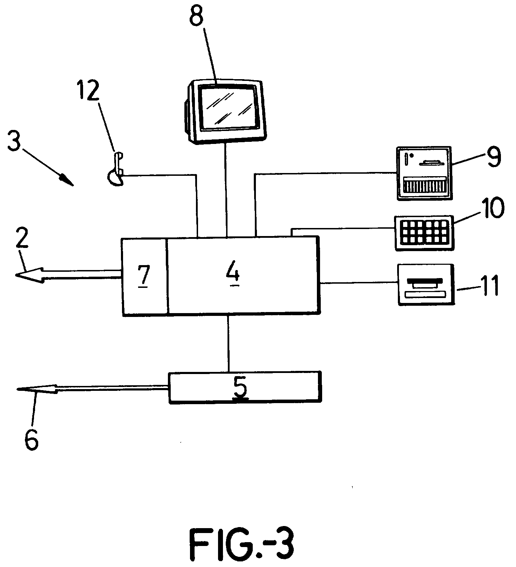

In turn, each interactive public terminal (3), as shown in the block diagram in figure 3, is provided with an internal processor unit (4) fitted with a power source (5) and connection (6) to a 220 volt electrical supply network, said processor unit (4) having a communications module (7) connecting with the various hotels (1) via the above mentioned public communication network (2).

The internal processor unit (4) is assisted by a TV monitor (8), an automatic cashier (9), a keypad (10), a printer (11) and a microtelephone (12), the TV monitor (8) being in charge of presenting all the terminal's interactive data, namely information relating to the hotels connected to the terminal, such as room prices, amount of the automatic room reservation fee, room characteristics, etc., as well as any other publicity item pertaining to the hotels (1) connected to the system.

The above information is available through keypad (10) instructions after the user has selected the hotel, thereby determining the automatic dialing of the selected hotel's telephone number for placing the user in direct contact with the hotel operator through the microtelephone (12) for further information in regard to room availability, available room characteristics and any other information requested.

Once the customer makes up his mind about a specific hotel, following his telephone contact, he is required to pay the reservation fee through the automatic cashier (9) provided for that purpose, while the printer (11) issues the corresponding reservation fee ticket.

The communications module (7), which is the public transmission network connection interface, is in charge of automatic dialing, data modulation and transmission, receiving incoming calls from hotel terminals, correcting transmission errors, etc.

The continuous supply source (5) protects the terminal against power supply (6) voltage drops and variations.

Figure 2 is an example, from a mechanical standpoint, of a practical embodiment of a public interactive terminal showing the special location of the monitor (8), the keypad (10), the automatic cashier (9), the printer (11) and the microtelephone (12) installed within a cabinet (13) fitted with a rear door (14) for access to the various mechanisms inside the unit, the door obviously being fitted with a safety lock and watertight means, the various above mentioned external elements being likewise watertight, thus enabling outdoors installation of the terminal, the cabinet (13) itself being fitted with a front upper visor (15) to provide a certain degree of protection.

The TV monitor (8) is attached to the cabinet (13) structure through a base and side sections, with connections protected by rubber joints to ensure its watertight condition, whereas the keypad (10) is not only impervious to weather conditions but is also protected against tampering. In fact, the various operational and accessible components in these interactive public terminals (3) are conveniently designed and structured to withstand the effects of outdoor installation, namely conditions deriving from adverse climatic conditions and inadequate or vandalic use.

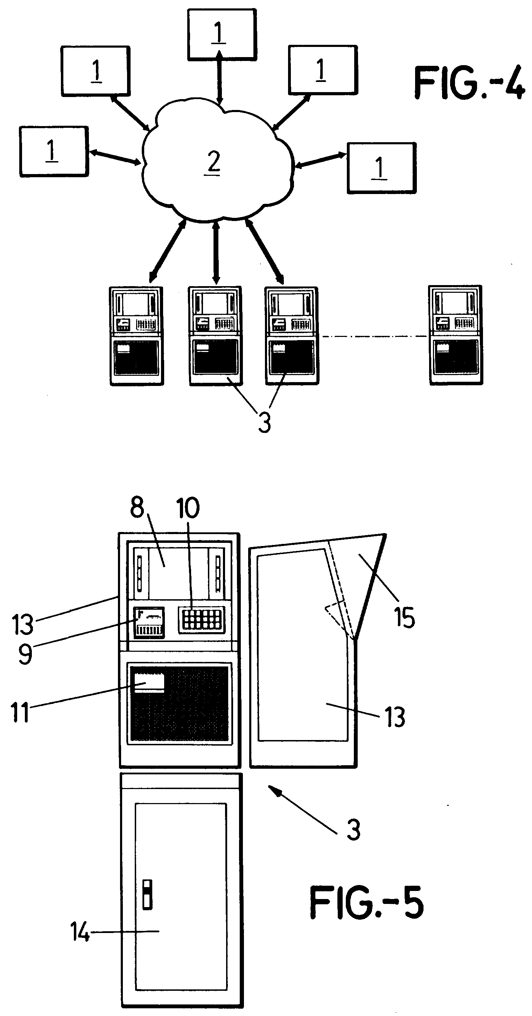

According to an alternative embodiment of the invention, the system may be fully automatic, as illustrated in figures 4 to 6.

In the above case, the system is also designed to connect a series of hotels (1), through a public communications network (2), with a series of interactive public terminals (3), although introducing particular features, which in this case involve the use in each hotel (1) of a computer unit which, on request from any of the interactive public terminals (3), provides the terminal with permanently updated data about room availability, reservation conditions, prices, etc., and is furthermore capable of entering incoming reservations from any of the interactive public terminals (3).

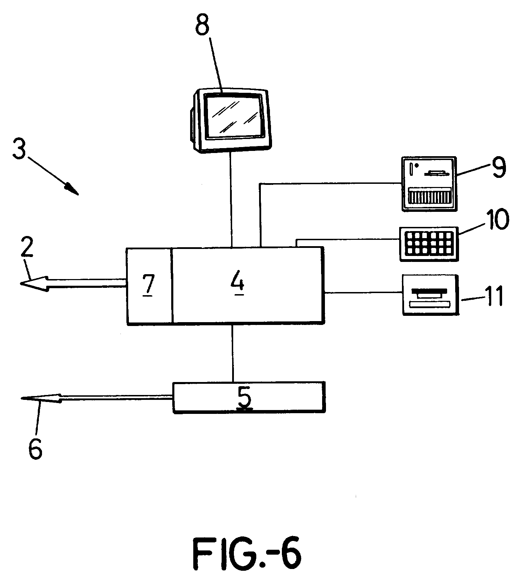

Each public interactive terminal (3) is fitted with an internal processor unit (4), a power source (5) and a communications module (7) for connecting with the various hotels (1) through the public communication network (2), as shown in figure 6, the internal processor unit (4) being assisted by a TV monitor (8), an automatic cashier (9), a keypad (10) and a printer (11), although obviously devoid of the microtelephone (12) included in the previous case.

The keypad (10) in terminal (3) enables selection of the hotel category, provides a list of room prices and confirms reservations.

The automatic cashier (9) is designed to receive reservation fee payments for the hotel selected, while the printer (11) issues the corresponding reservation ticket.

The present description need not be more extensive to enable experts on the subject to grasp its scope and the advantages deriving therefrom.

The materials, shape, size and disposition of the various components are liable to variation provided the essence of the invention is not altered.

The terms of this specification must at all times be interpreted in their broad, non limiting sense.

## Claims

1. A system for performing distance hotel reservations and similar reservations, essentially characterized in that it is composed of the functional combination of a series of automatic hotel (1) confirmation terminals located in the various hotels integrated in the system, and a series of public interactive terminals (3) conveniently distributed throughout a specific area or geographical sector, said public terminals being connected to the automatic hotel terminals through public communications networks (2) such as a switch telephone network, each of said interactive public terminals (3) being provided with means for requesting and receiving information from each hotel (1) via automatic telephone connection with any of the hotels selected and for providing confirmation to the hotel that a reservation fee has been paid.

2. A system for performing distance hotel reservations and similar reservations according to claim 1, characterized in that each public interactive terminal (3) incorporates an internal processor unit (4) powered through a general electric supply network (6) and a continuous power supply source (5), said processor unit (4) being fitted with a communications module (7) for connecting with the hotels (1) via the communication networks (2) and said processor unit being assisted by a TV monitor (8), an automatic cashier (9), a keypad (10), a printer (11) and a microtelephone (12) in such a manner as to enable, through the keypad (10), to request for information from the hotels (1), information which is subsequently displayed in the monitor (8) and whereby, following the selection of a hotel, automatic dialing take place for telephone connection with the hotel operator in charge of providing information concerning room availability and conducting the reservation after introducing the amount corresponding to the reservation fee in the automatic cashier (9), either in cash or by credit card, the printer (11) then issuing a reservation ticket or voucher and generating a signal to the hotel's (1) automatic confirmation terminal to the effect that the operation has been implemented.

3. A system for performing distance hotel reservations and similar reservations according to the foregoing claims, characterized in that the automatic confirmation terminal located at each hotel (1) generates and optical and/or acoustical signal to the hotel operator indicating that the reservation fee has in fact been paid.

4. A system for performing distance hotel reservations and similar reservations according to the foregoing claims, characterized in that the mechanisms in each public interactive terminal (3) are fitted within a cabinet (13) designed to be installed outdoors, providing watertight closure means and the accessible components of which, i.e. TV screen (8), automatic cashier (9), keypad (10) and printer (11), are likewise protected against the effects of the environment and against tampering.

5. A system for performing distance hotel reservations and similar reservations according to claim 1, characterized in that each hotel (1) is fitted with an automatic terminal incorporating a computer capable of receiving requests for information from any of the public interactive terminals (3) and of informing about room availability, prices and any other data of interest to the user, in addition to receiving reservation confirmations from said public interactive terminals.

6. A system for performing distance hotel reservations and similar reservations according to claim 5, characterized in that each public interactive terminal (3) incorporates an internal processor unit (4) powered by the general electric supply network (6) through a continuous power source (5), said processor unit (4) being fitted with a communications module (7) for connecting with the various hotel (1) automatic terminals via the communication networks (2), said processor unit being assisted by a TV monitor (8), a keypad (10), a printer (11) and an automatic cashier (9), whereby information can be requested through the keypad (10) from the hotel automatic terminal (1), received in monitor (8) and, if applicable, implementing the reservation after introducing the amount corresponding to the reservation fee in the automatic cashier (9), either in cash or by credit card, the printer (11) then issuing a reservation ticket or voucher.

7. A system for performing distance hotel reservations and similar reservations according to claims 5 and 6, characterized in that the mechanisms in each public interactive terminal (3) are fitted inside a cabinet (13) designed to be installed outdoors, said cabinet being provided with watertight closure means and whose accessible components, i.e. TV screen (8), automatic cashier (9), keypad (10) and printer (11) are likewise conveniently protected against the environment and against tampering.
